# EUROPÄISCHE PATENTANMELDUNG

(11) **EP 2 309 215 A2**
(43) Veröffentlichungstag der Anmeldung: **13.04.2011**
(21) Anmeldenummer: 10170552.3
(22) Anmeldetag: 23.07.2010
(51) Int. Cl.: F25D 13/06

(54) **Verfahren und Kühltunnel zum Kühlen von Produkten**

(30) Priorität: 30.09.2009 DE 102009045143
(71) Anmelder: Voith Patent GmbH, 89522 Heidenheim (DE)
(72) Erfinder: Pumpe, Rainer Klaus, 95448 Bayreuth (DE)

(57) **Zusammenfassung**

Die Erfindung betrifft Verfahren zum Kühlen von Produkten, insbesondere Lebensmittel, wie Molkereiprodukte, bei dem die zu kühlenden Produkte gestapelt werden und diese Stapel (3) kontinuierlich oder diskontinuierlich nacheinander durch einen Kühltunnel (1) in einer Förderrichtung (F) gefördert werden und dabei mit einem Kühlmittel (6) behandelt werden, wobei das Kühlmittel (6) quer zur Förderrichtung (F) der Stapel (3) einer Seite der Stapel (3) zugeführt wird, die Stapel (3) durchdringt und auf der anderen Seite der Stapel (3) abgeführt wird

Erfindungsgemäß ist vorgesehen, dass zunächst ein erster Kühlmittelstrom (6.1) des Kühlmittels (6) von außen nach innen und anschließend ein zweiter Kühlmittelstrom (6.2) des Kühlmittels (6) von innen nach außen an jeweils einen zu kühlenden Produktstapel (3) abgegeben wird.

Die Erfindung betrifft auch einen Kühltunnel (1).

## Beschreibung

Die Erfindung betrifft ein Verfahren zum Kühlen von Produkten, insbesondere Lebensmittel, wie Molkereiprodukte, bei dem die zu kühlenden Produkte gestapelt werden und diese Stapel kontinuierlich oder diskontinuierlich nacheinander durch einen Kühltunnel in einer Förderrichtung gefördert werden und dabei mit einem Kühlmittel behandelt werden, wobei das Kühlmittel quer zur Förderrichtung der Stapel einer Seite der Stapel zugeführt wird, die Stapel durchdringt und auf der anderen Seite der Stapel abgeführt wird
Die Erfindung betrifft auch einen Kühltunnel zum Kühlen von Produkten.

Verfahren und Kühltunnel zum Kühlen von Produkten sind beispielsweise aus der DE 100 17 408, der EP 1 455 151 B1 oder der nachveröffentlichten DE 10 2008 040 353.5 bekannt. Außerdem wird auf die DE 10 2007 059 654 A1 verwiesen. Diese Druckschrift offenbart eine Behandlungsvorrichtung zum Kühlen und/oder Erwärmen von Gegenständen, die eine Düsenplatte mit einer Vielzahl von variierbaren Düsenöffnungen zur Abgabe eines gasförmigen Behandlungsmediums umfasst.

Zumeist befindet sich zwischen Ein- und Ausgang des Kühltunnels noch eine Umsetzungs- oder Drehvorrichtung, mit der die Stapel von zu kühlenden Produkten während der Beförderung durch den Kühltunnel umsetzt oder gedreht werden, um sicherzustellen, dass die zu kühlenden Produkte bzw. Produkte von allen Seiten, d.h. gleichmäßig gekühlt werden. Dazu sind mehrere Fördervorrichtungen pro Tunellabschnitt notwendig. So ist pro Kühlabschnitt eine Fördervorrichtung notwendig. Hinzukommen noch Steuerungselemente, Sensoren usw. In manchen Fällen sind zusätzliche Einrichtungen notwendig, mit der die Umsetzungs- oder Drehvorrichtungen zu be- und entladen sind. Der apparative Aufwand ist dadurch hoch, ebenso die Investitionskosten und der Wartungsaufwand. Nachteilig ist auch, dass im Bereich der Dreh- und Umsetzungsvorrichtung keine Kühlung stattfindet, wodurch die Kühlkette unterbrochen wird.

Es ist daher Aufgabe der Erfindung, ein Verfahren zum Kühlen von Produkten sowie einen Kühltunnel anzugeben, das bzw. der die Nachteile des Standes der Technik nicht aufweist.

Die Aufgabe wird mittels eines Verfahrens mit den Merkmalen des Anspruches 1 gelöst. Erfindungsgemäß ist vorgesehen, dass zunächst ein erster Kühlmittelstrom von außen nach innen und anschließend ein zweiter Kühlmittelstrom von innen nach außen an jeweils einen zu kühlenden Produktstapel abgegeben wird. Es erfolgt hierbei also eine Umkehr der Strömungsrichtung, wodurch auf diese denkbar einfache Weise ein gleichmäßiges Kühlen der Produkte erreicht wird, ohne dass die Stapel in ihrer Kühlposition verändert werden müssen.

Aufgrund der erfindungsgemäßen Verfahrensführung kann man auf Umsetzungs- bzw. Drehvorrichtungen für die Stapel mit den zu kühlenden Produkten verzichten. Durch diese erfindungsgemäße einfache Umkehrung der Strömungsrichtung des Kühlmittelstromes wird, wie gesagt einerseits eine gewünschte gleichmäßige Kühlung der Produkte erreicht. Andererseits kommt man mit nur einer einzigen Fördereinrichtung pro Stapelreihe aus, die durchgängig durch den Kühltunnel verläuft. Die Kühlkette wird dadurch nicht unterbrochen, wodurch insbesondere die Haltbarkeit der Lebensmittel verlängert wird. Außerdem wird der Raumbedarf für die Kühlung verringert.

Das Verfahren lässt sich zweckmäßig weiterbilden, indem eine Absaugung des Kühlmittelstroms, nachdem es die gestapelten Produkte durchströmt hat, an verschiedenen Stellen innerhalb des Kühltunnels vorgenommen wird.

Eine erste Absaugung wird zwischen den parallel gegenüberliegenden Reihen der von außen nach innen mit dem Kühlmittelstrom beaufschlagten Stapel vorgenommen. Eine zweite Absaugung erfolgt danach jeweils seitlich im Bereich jener Stapel, die von innen nach außen mit dem Kühlmittel beaufschlagt werden.

Dieser abgesaugte Kühlmittelstrom, was insbesondere erwärmte Luft ist, wird im Kreislauf geführt, d.h. zweckmäßig nach oben über die Decke des Kühlraumes des Kühltunnels abgesaugt, heruntergekühlt und wieder zur Kühlung der Produkte genutzt. Dadurch lassen sich innerhalb des Kühltunnels die gewünschten Kühltemperaturen aufrechterhalten.

Die Aufgabe der Erfindung wird auch mit einem Kühltunnel gemäß den Merkmalen des Anspruches 5 gelöst. Erfindungsgemäß sind eine erste Kühleinrichtung und eine zweite Kühleinrichtung vorgesehen. Die erste Kühleinrichtung befindet sich an der Außenseite des Kühltunnels und dient der Abgabe des Kühlmittelstromes von außen nach innen an die Außenseite der Stapel mit den zu kühlenden Produkten. Die zweite Kühleinrichtung befindet sich erfindungsgemäß mittig zwischen zwei parallel angeordneten Reihen jener Stapel, die an ihrer Innenseite nun mit dem Kühlmittelstrom beaufschlagt sind. Hier verläuft die Richtung des Kühlmittelstroms von innen nach außen. Wichtig dabei ist, dass nur eine einzige Fördereinrichtung für den Transport einer Reihe von zu kühlenden Stapeln vorgesehen ist.

Hierdurch lassen sich die sonst üblichen Förder- und Drehvorrichtungen, sowie Steuerungs- und Automatisierungskomponenten einsparen. Dadurch sind Investitions- und Wartungskosten reduzierbar.

In einer zweckmäßigen Variante kann vorgesehen sein, dass die Anordnung der Kühleinrichtungen (also außen angeordnete Kühleinrichtung und mittig angeordnete Kühleinrichtung) entlang der Förderrichtung innerhalb des Kühltunnels einander abwechselt. Diese Ausführungsart bietet sich insbesondere bei langen Kühlstrecken an.

Bevorzugt ist bei der einen einzig vorhandenen Fördereinrichtung an eine auf Schienen rollende Lager- und Transportpalette gedacht.

Vorteilhafterweise weist die Kühleinrichtung eine vertikal angeordnete Düsenplatte auf für die Abgabe des Kühlmittelstroms. Die Düsenplatte beinhaltet dazu eine Vielzahl an Düsen. Diese Düsen sind entweder vollständig oder nur partiell verschließbar. Letztere Möglichkeit bietet sich beispielsweise bei unterschiedlichen Höhen der gestapelten Produkte an. Im Übrigen kann eine Optimierung der Geometrie und Anzahl der Düsen im Hinblick auf die gewünschten Strömungsverhältnisse erfolgen. So kann ein automatisches Öffnen und Schließen der Düsen und /oder Verändern der Ausstoßkraft sinnvoll sein. Ein automatisches Öffnen kann auch über eine Andockstation erfolgen.

Obwohl die Erfindung für ein Kühlen von Produkten, insbesondere Lebensmittel, vorgesehen und beschrieben ist, so eignet sich das Verfahren, d.h. die Strömungsrichtungsumkehr des Temperiermittels prinzipiell auch für die Erwärmung eines Gutes. Anstelle des hier beschriebenen Kühltunnels ist dann ein Wärmetunnel vorhanden. Das Kühlmittel ist dann ein Heizmittel.

Nachfolgend wird die Erfindung anhand eines Ausführungsbeispieles näher erläutert. Es zeigt in schematischer Darstellung:

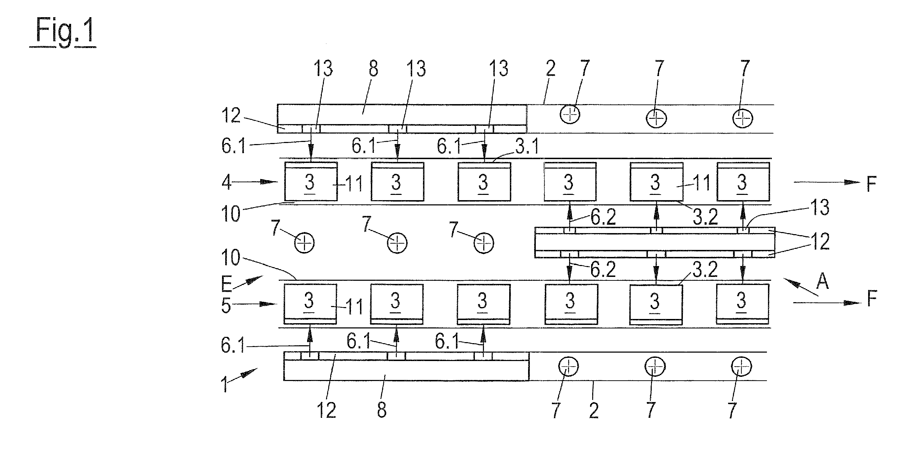

- **Figur 1:**: die Draufsicht auf einen Kühltunnel.

Der mit 1 bezeichnete Kühltunnel weist ein Gehäuse mit zwei parallelen Außenwänden 2, die die Längsseiten bilden, sowie einen Eingang E und einen Ausgang A für die zu kühlenden Produkte an seinen Stirnseiten auf. Die Produkte, beispielsweise Molkereierzeugnisse, wie Joghurt in Bechern, sind nebeneinander und übereinander auf einer Palette gestapelt. Ein solcher Stapel ist mit 3 bezeichnet. Man erkennt in Figur 1, dass die Stapel 3 in zwei parallelen Reihen 4 und 5 nebeneinander durch den Kühltunnel 1 in Förderrichtung F gefördert werden. Während ihres Aufenthaltes bzw. Behandlung im Kühlkanal 1, was kontinuierlich oder diskontinuierlich erfolgen kann, wird eine Seite des Stapels 3 einem gasförmigen Kühlmittel 6, insbesondere Kühlluft, ausgesetzt.

Das erfolgt derart, dass das Kühlmittel 6 in zwei Kühlmittelströmen 6.1 und 6.2 jeweils quer zur Förderrichtung F dem bzw. der Stapel 3 zugeführt wird, danach die Stapel 3 durchdringt und auf der anderen Seite der Stapel 3 - nun als erwärmter Kühlmittelstrom 6.3, bzw. in Form von erwärmter Luft mit einer Absaugung 7 abgesaugt wird.

Der erste Kühlmittelstrom 6.1 wird zunächst von jeweils einer ersten Kühleinrichtung 8 aus, die an den beiden Längswänden 2 des Kühltunnels 1 angeordnet sind, an die Außenseite 3.1 jeweils einer Reihe 4 bzw. gegenüberliegenden Reihe 5 der Stapel 3 abgegeben. Mit einer zweiten, in der Mitte zwischen beiden Stapelreihen angeordneten Kühleinrichtung 9 wird der zweite Kühlmittelstrom 6.2 jeweils von der Mitte des Kühltunnels 1 aus an die Innenseite 3.2 der beiden Reihen 4 und 5 der Stapel 3 abgegeben.

Beide Kühleinrichtungen 8 und 9 und auch die zugehörigen Absaugungen 7 wechseln in Längsrichtung des Kühltunnels 1 der Reihe nach einander ab. Die Reihe ist beliebig verlängerbar, je nachdem wie lang der Kühltunnel 1 ist bzw. wie lang die Kühlstrecke konzipiert ist.

Der Vorteil dieses Verfahrens bzw. dieser Ausführung ist, dass man auf ein Umsetzen oder Drehen der zu kühlenden Stapel 3 im Bereich zwischen einer Kühleinrichtung zur nächsten verzichten kann und dennoch ein gleichmäßiges Kühlergebnis erzielt. Man benötigt deshalb nur eine einzige Fördereinrichtung 10, mit der die Stapel 3 kontinuierlich oder auch diskontinuierlich vorbei an den äußeren Kühleinrichtungen 8 und der inneren Kühleinrichtung 9 durch den Kühltunnel 1 gezogen werden.

Als Fördereinrichtung 10 für die die auf Paletten 11 aufgestapelten Produkte bzw. Stapel 3 sind Fördermittel, wie Band oder Kette vorgesehen.

Die Kühleinrichtungen 8 und 9 weisen im Übrigen eine vorgeschaltete, an sich bekannte vertikale Düsenplatte 12 auf. Sie sorgt mit ihrer Vielzahl an Düsen 13 für die Verteilung des Kühlmittelstroms 6 und die gleichmäßige Umströmung der einzelnen Produkte mit dem Kühlmittelstrom. Die besagte Düsenplatte 12 weist wie gesagt, eine Vielzahl an Düsen 13 auf. Diese Düsen 13 sind entweder über die ganze Platte 12 verteilt und partiell verschließbar oder sind bereichsweise angeordnet. Ihre Größe und/oder ihre Ausströmstärke ist bevorzugt einstellbar, je nachdem wie breit und wie hoch die Stapel und auch wie dicht sie gestapelt sind. Gewünschtenfalls ist eine automatisierte Düseneinstellung möglich.

Nachzutragen ist, dass die Kühleinrichtungen 8 und 9 mit nicht mit dargestellten, frequenzgeregelten Motoren über Druck- und Temperatursensoren betrieben werden.

### Bezugszeichenliste

- 1: Kühltunnel
- 2: Längswand
- 3: Stapel
- 3.1: Außenseite
- 3.2: Innenseite
- 4: Reihe der Stapel
- 5: Reihe der Stapel
- 6: Kühlmittelstrom
- 6.1: erster Kühlmittelstrom
- 6.2: zweiter Kühlmittelstrom
- 6.3: abgesaugter Kühlmittelstrom
- 7: Absaugung
- 8: erste Kühleinrichtung
- 9: zweite Kühleinrichtung
- 10: Fördereinrichtung
- 11: Palette
- 12: Düsenplatte
- 13: Düse
- E: Eingang
- A: Ausgang
- F: Förderrichtung

## Patentansprüche

1. Verfahren zum Kühlen von Produkten, insbesondere Lebensmittel, wie Molkereiprodukte, bei dem die zu kühlenden Produkte gestapelt werden und diese Stapel (3) kontinuierlich oder diskontinuierlich nacheinander durch einen Kühltunnel (1) in einer Förderrichtung (F) gefördert werden und dabei mit einem Kühlmittel (6) behandelt werden, wobei das Kühlmittel (6) quer zur Förderrichtung (F) der Stapel (3) einer Seite der Stapel (3) zugeführt wird, die Stapel (3) durchdringt und auf der anderen Seite der Stapel (3) abgeführt wird, **dadurch gekennzeichnet, dass** zunächst ein erster Kühlmittelstrom (6.1) des Kühlmittels (6) von außen nach innen und anschließend ein zweiter Kühlmittelstrom (6.2) des Kühlmittels (6) von innen nach außen an jeweils einen zu kühlenden Produktstapel (3) abgegeben wird.

2. Verfahren nach Anspruch 1, **dadurch gekennzeichnet, dass** die zu kühlenden Produktstapel (3)vorzugsweise in parallelen Reihen (4, 5) nebeneinander mit dem Kühlmittel (6) behandelt werden.

3. Verfahren nach Anspruch 2, **dadurch gekennzeichnet, dass** zwischen den parallel gegenüberliegenden Reihen (4, 5) der von außen nach innen mit dem Kühlmittelstromstrom (6.1) beaufschlagten Stapel (3) und an den Seiten jener Stapel (3), die von innen nach außen mit dem Kühlmittelstromstrom (6.2) beaufschlagt werden, eine Absaugung (7) vorgenommen wird.

4. Verfahren nach Anspruch 3, **dadurch gekennzeichnet, dass** Kühlmittel (6.3), insbesondere erwärmte Luft, nach außen, insbesondere nach oben hin abgeführt wird.

5. Kühltunnel (1) zum Kühlen von Produkten, insbesondere Lebensmittel, wie Molkereiprodukte, wobei die Produkte in Form von Stapeln (3) kontinuierlich oder diskontinuierlich nacheinander und in parallelen Reihen (4, 5) nebeneinander im Inneren des Kühltunnels (1) in Förderrichtung (F) der Stapel (1) von einem Eingang (E) zu einem Ausgang (A) transportierbar sind und dabei mit mindestens einer Kühleinrichtung (8 ) mit einem Kühlmittelstrom (6) beaufschlagbar sind, **dadurch gekennzeichnet, dass** eine erste Kühleinrichtung (8) und eine zweite Kühleinrichtung (9) vorgesehen sind, wobei sich die erste Kühleinrichtung (8) an der Seitenwand (2) des Kühltunnels (1) befindet und zur Abgabe des Kühlmittelstroms (6) an die Außenseite (3.1) der Stapel (3) mit den zu kühlenden Produkten dient und die zweite Kühleinrichtung (8) der ersten Kühleinrichtung (8) nachgeordnet ist und sich mittig zwischen zwei parallel angeordneten Reihen (4, 5) jener Stapel (3) befindet, die an ihrer Innenseite (3.2) mit dem Kühlmittelstrom (6) beaufschlagt sind, wobei nur eine einzige Fördereinrichtung (10) für den Transport einer Reihe (4, 5) von zu kühlenden Stapeln (3) vorgesehen ist.

6. Kühltunnel (1) nach Anspruch 5, **dadurch gekennzeichnet, dass** die Anordnung der Kühleinrichtungen (8, 9) entlang der Förderrichtung (F) einander abwechseln und in ihrer Anzahl gewünschtenfalls erweiterbar sind.

7. Kühltunnel (1) nach Anspruch 5, **dadurch gekennzeichnet, dass** die Fördereinrichtung (10) bevorzugt als Förderband oder Förderkette ausgebildet ist.

8. Kühltunnel (1) nach Anspruch 5 oder 6, **dadurch gekennzeichnet, dass** die Kühleinrichtung (8, 9) eine vertikal angeordnete Düsenplatte (12) für die Abgabe des Kühlmittelstroms (6) aufweist, wobei die Düsenplatte (12) dazu eine Vielzahl an Düsen (13) beinhaltet.

9. Kühltunnel (1) nach Anspruch 7, **dadurch gekennzeichnet, dass** Düsen (13) der Düsenplatte (12) partiell verschließbar sind.

10. Kühltunnel (1) nach Anspruch 8 oder 9, **dadurch gekennzeichnet, dass** die Größe der Düsen (13) der Düsenplatte (12) und/oder ihre Ausströmstärke veränderbar sind.

11. Kühltunnel (1) nach Anspruch 9, **dadurch gekennzeichnet, dass** die Größe der Düsen (13) der Düsenplatte (12) und/oder ihre Ausströmstärke steuer-und/oder regelbar ist.

12. Kühltunnel (1) nach Anspruch 4, **dadurch gekennzeichnet, dass** eine Absaugung (7) zur Abführung des durch die Stapel (3) dringenden Kühlmittelstroms (6) vorgesehen ist.
